# EUROPEAN PATENT SPECIFICATION

(11) **EP 1 470 020 B1**
(45) Date of publication and mention of the grant of the patent: **14.06.2006**
(21) Application number: 03707589.2
(22) Date of filing: 28.01.2003
(51) Int. Cl.: B60N 2/07

(54) **AUTOMOTIVE SEAT TRACK HAVING VERTICALLY ADJUSTABLE BEARINGS**
FAHRZEUGSITZGLEITSCHIENE MIT HÖHENVERSTELLBAREM LAGER
GLISSIERE DE SIEGE AUTOMOBILE A PALIERS AJUSTABLES VERTICALEMENT

(30) Priority: 28.01.2002 US 352379 P
(43) Date of publication of application: 27.10.2004
(73) Proprietor: Intier Automotive, Inc., Novi, MI 48377 (US)
(72) Inventor: SEVERINI, Joseph, A., Holland Landing, Ontario L9N 1H9 (CA)
(74) Representative: Hössle Kudlek & Partner
(86) International application number: PCT/US2003/002642
(87) International publication number: WO 2003/064203

(56) References cited:
- EP-A- 0 394 623
- EP-A- 0 568 900
- EP-A- 0 947 381
- DE-A- 3 724 758
- DE-A- 4 133 509
- DE-U- 9 112 600
- GB-A- 2 107 179
- US-A- 2 336 433
- US-A- 3 926 397
- US-A- 4 809 939
- US-A- 5 454 541
- US-A- 5 741 000

## Description

### BACKGROUND OF THE INVENTION

### 1. Field of the Invention

The invention relates to a seat track assembly for interconnecting a seat to a floor of an automotive vehicle and, more particularly, to flat and arcuate bearing surfaces within the seat track assembly allowing torsional loading and movement of a mobile outer track relative to a fixed inner track.

### 2. Description of the Related Art

Automotive vehicles include seats for supporting occupants within the vehicle. Seats typically include a seat track assembly interconnecting the seat to a floor of the vehicle to allow selective locking and adjustment of the seat along the floor of the vehicle among a plurality of seating positions. A seat track assembly includes a fixed track fixedly secured to the floor of the vehicle and a mobile track slidably coupled to the fixed track and fixedly secured to the bottom of the seat.

It is known to provide a plurality of bearings between the fixed and mobile tracks to reduce friction and facilitate movement of the mobile track relative to the fixed track. An example of a seat track assembly using such a plurality of bearings is disclosed in the United States Patent 5,741, 000 corresponding to the preamble of claim 1, which issued to Goodbred on April 21,1998.

EP-A-0 394 623 shows a longitudinal guide, in particular for a longitudinal adjustment device of a vehicle seat, having a lower rail and an upper rail, a U-shaped guide flange of the upper rail engaging about a support web of the lower rail, and sliding means being arranged between the guide flange and the support web in the manner of a three-point support. In this case, at least the guide flange or the support web have guide surfaces constructed as axial and radial guide paths and in contact with the sliding means.

It remains desirable to provide a seat track assembly having a plurality of bearings that allows torsional loading and movement of the mobile track relative to the fixed track while, at the same time, facilitating sliding movement of the mobile track relative to the fixed track.

### SUMMARY OF THE INVENTION

According to the invention, which is defined in claim 1, a seat track assembly is adapted to mount a seat to a floor of an automotive vehicle and provide selective forward and rearward adjustment of the seat relative to the floor among a plurality of seating positions. The seat track assembly includes an inner track fixedly secured to the floor of the vehicle. The inner track has a flattened bearing surface extending longitudinally along the inner track. An outer track is fixedly secured to the seat and slidably coupled to the inner track to allow selective sliding adjustment of the seat relative to the floor of the vehicle. The outer track includes an arcuate bearing surface extending longitudinally along the outer track and opposing the flattened bearing surface. A plurality of cylindrical bearings are positioned between the flattened bearing surface of the inner track and the arcuate bearing surface of the outer track to accommodate torsional loading and movement of the outer track with respect to the inner track while facilitating the selective sliding adjustment of the seat relative to the floor. A bearing guide for retaining said plurality of bearings between said arcuate and first bearing surfaces extends between the inner track and outer track and includes spaced apart sides and a cross member extending laterally between the sides to define a generally H-shaped cross section, each of the sides includes opposite ends adapted to engage the inner track and the outer track to laterally retain the plurality of bearings between the flattened and arcuate bearing surfaces. Each of the plurality of bearings is rotatably coupled to the sides of the respective bearing guide.

Further features of the invention are disclosed in the dependent claims.

### BRIEF DESCRIPTION OF THE DRAWINGS

Advantages of the invention will be readily appreciated as the same becomes better understood by reference to the following detailed description when considered in connection with the accompanying drawings wherein:
Figure 1 is a section view of a seat track assembly incorporating one embodiment of the invention therein; and
Figure 2 is a fragmentary side view of the seat track assembly.

### DETAILED DESCRIPTION OF THE PREFERRED EMBODIMENT

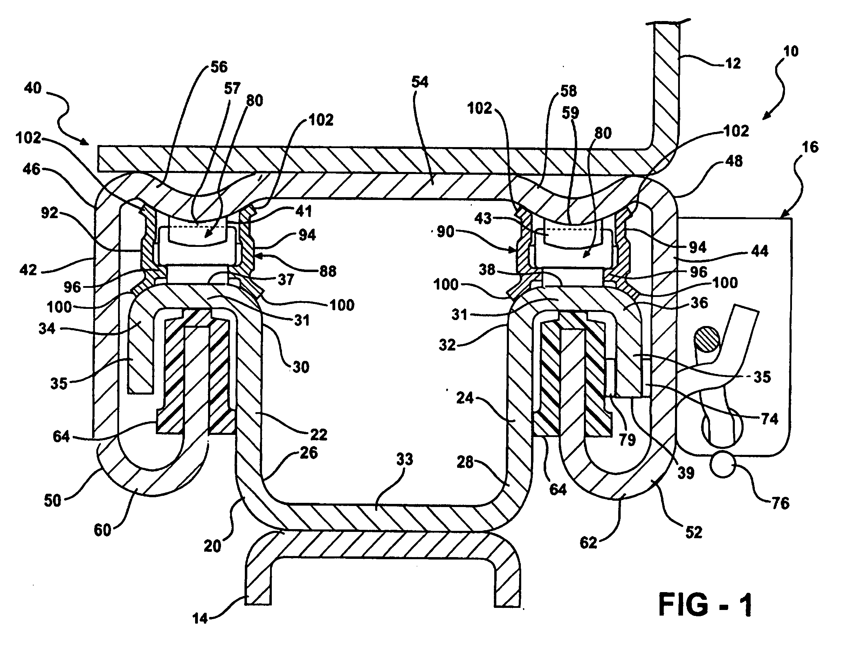

Referring to Figure1, a seat track assembly of the invention is generally shown at 10. A pair of seat track assemblies 10 (one shown) slidably interconnects a vehicle seat 12 to a floor of an automotive vehicle. The seat track assembly 10 allows selective forward and rearward adjustment of the seat 12 among a plurality of seating positions along the floor of the vehicle. The seat track assembly 10 includes a latch mechanism 16 for selectively locking the seat 12 in any one of the plurality of seating positions. An example of a latch mechanism 16 is disclosed in PCT Application US01/44685, which is hereby expressly incorporated herein by reference in its entirety.

The seat track assembly 10 includes a fixed or inner track 20. A riser 14 interconnects the inner track 20 to the floor of the vehicle. The inner track 20 has a generally U-shaped cross-section defined by generally parallel upright sides 22,24 each having first 26,28 and distal second 30,32 ends. A base 33 extends laterally between the first ends 26,28 of the sides 22,24. An outer edge 31 extends laterally outwardly from each of the sides 22,24. A generally flat bearing surface 37,38 is formed in the outer edge 31 and extends longitudinally with respect to the inner track 20. An outer wall 35 extends generally perpendicularly from each of the outer edges 31 to define a flange 34,36. A plurality of teeth 39 is formed along at least one of the outer walls 35. The plurality of teeth 39 is disposed longitudinally with respect to the inner track 20 for cooperating with the latch mechanism 16 to define the plurality of seating positions. Each bearing surface 37,38 extends longitudinally between spaced apart tabs 41,43.

A mobile or outer track 40 is fixedly secured to the seat and slidably coupled to the inner track 20. The outer track 40 includes generally upright sides 42, 44 each extending between a first end 46, 48 and a distal second end 50, 52. A base 54 extends laterally between the first ends 46, 48 of the sides 42, 44 of the outer track 40 to define a U-shaped cross section. Concavities 56, 58 are formed in the base 54 of the outer track 40 corresponding to the flat bearing surfaces 37, 38 of the inner track 20. Each concavity 56, 58 protrudes toward the inner track 20 to define an arcuate bearing surface 57, 59 opposing the corresponding flat bearing surfaces 37, 38. Each arcuate bearing surface 57, 59 extends longitudinally with respect to the outer track 40. Each second end 50, 52 of the upright sides 42, 44 of the outer track 40 includes a hook 60, 62 engaged with the flanges 34, 36 of the inner track 20 to prevent vertical separation of the outer track 40 from the inner track 20. A plurality of spacers 64 extends over each of the hooks 60, 62 between the inner 20 and outer 40 tracks to reduce rattle between the inner 20 and outer 40 tracks.

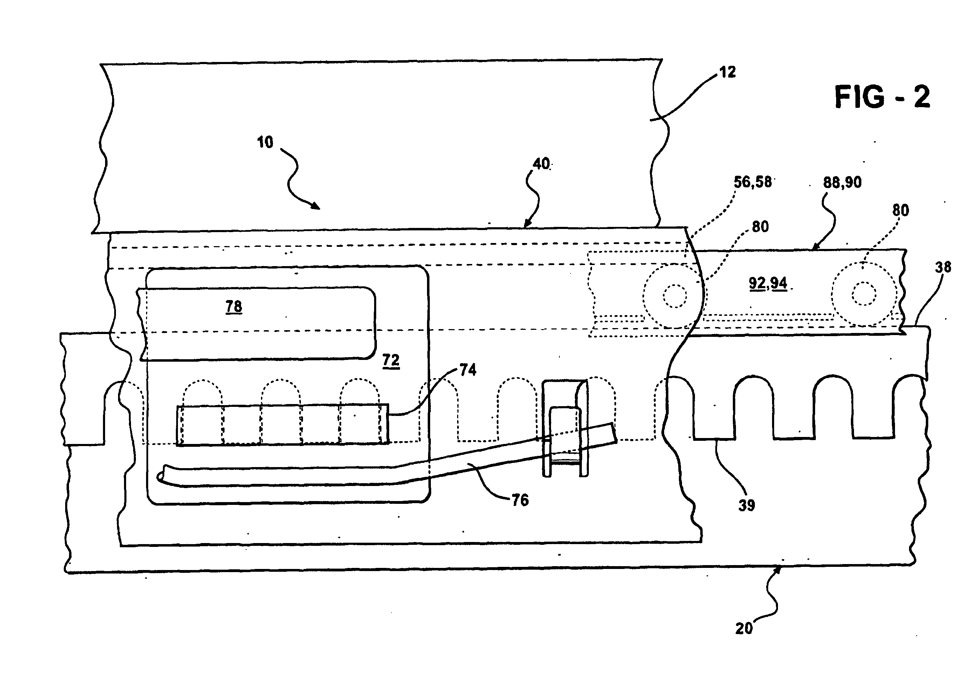

Referring to Figure 2, the latch mechanism 16 is operatively coupled to the outer track 40. The latch mechanism 16 includes a latch plate 74 having a plurality of apertures 79 for lockingly engaging the plurality of teeth 39. While engaged with the plurality of teeth 39, the latch plate 74 prevents sliding movement of the outer track 40 relative to the inner track 20. The latch plate 74 is movably supported on the outer track 40 for movement between a locked condition, wherein the plurality of apertures 79 is engaged with the plurality of teeth 39, and an unlocked condition, wherein the plurality of apertures 79 is disengaged with the plurality of teeth 39 to allow sliding movement of the outer track 40 relative to the inner track 20. A biasing member or spring 76 is energized between the outer track 40 and the latch plate 74 for biasing the latch plate 74 toward the locked condition. A release lever 78 is operatively coupled to the latch plate 74 for facilitating movement of the latch plate 74 between the locked and unlocked conditions.

A plurality of cylindrical bearings 80 is positioned between the flat 37, 38 and arcuate 57, 59 bearing surfaces to reduce friction between the inner 20 and outer 40 tracks. Each of the plurality of cylindrical bearings 80 is disposed laterally with respect to the flat 37, 38 and arcuate 57, 59 bearing surfaces. Engagement between each of the plurality of bearings 80 and the flat bearing surfaces 37, 38 is defined by a line of contact extending laterally with respect to the longitudinal extent of the inner 20 and outer 40 tracks. Engagement between each of the plurality of bearings 80 and the arcuate bearing surface 57, 59 is defined by a point of contact. The line and point of contact between each of the plurality of bearings 80 and the flat 37, 38 and arcuate 57, 59 bearing surfaces, respectively, allows for torsional loading or movement of the outer track 40 with respect to the inner track 20 while still permitting and facilitating sliding movement of the outer track 40 relative to the inner track 20.

A bearing guide 88, 90 extends between each outer edge 31 of the inner track 20 and each concavity 56, 58 of the outer track 40. Each bearing guide 88, 90 includes spaced apart sides 92, 94 and a cross member 96 extending laterally between the sides 92, 94 to define a generally H-shaped cross section. Each of the plurality of bearings 80 is rotatably coupled to the sides 92, 94 of the respective bearing guide 88. Each of the sides 92, 94 includes opposite bent ends 100 and 102 adapted to engage the outer edge 31 and the concavities 56, 58 to laterally retain the plurality of bearings 80 between the flat 37, 38 and arcuate 57, 59 bearing surfaces.

In use, the latch plate 74 is moved to the unlocked condition to allow sliding movement of the outer track 40 relative to the inner track 20, and in turn, the seat relative to the floor of the vehicle among the plurality of seating positions. The plurality of bearings 80 roll between the flat 37, 38 and arcuate 57, 59 bearing surfaces to reduce friction between the outer 40 and inner 20 tracks. At the same time, the point of contact between the arcuate bearing surface 57, 59 and the plurality of bearings 80 allows the outer track 40 to roll laterally about the point of contact when the outer track 40 is torsionally loaded or moved with respect to the inner track 20 due to forces associated with, for example, the shifting weight of the occupant or the seat during lateral accelerations of the vehicle or during installation of the lower track 20 to the floor of the vehicle when the dimensions of the floor fall outside anticipated design tolerances. Additionally, the lateral line of contact between the plurality of bearings and the flat bearing surface 37, 38 laterally stabilizes the plurality of bearings 80 with respect to flat bearing surface 37, 38. When the seat is adjusted to the desired one of the plurality of seating positions, the latch plate 74 is allowed to return to the locked condition under the bias of the spring 76.

The invention has been described in an illustrative manner, and it is to be understood that the terminology, which has been used, is intended to be in the nature of words of description rather than of limitation.

Many modification and variations of the present invention are possible in light of the above teachings. It is, therefore, to be understood that within the scope of the appended claims, the invention may be practiced other than as specifically described.

## Claims

1. A seat track assembly (10) adapted to mount a seat (12) to a floor of an automotive vehicle and provide selective forward and rearward adjustment of the seat relative to the floor among a plurality of seating positions, said seat track assembly comprising:
an inner track (20) fixedly secured to the floor of the vehicle and having a first bearing surface (37, 38) extending longitudinally along said inner track (20);
an outer track (40) fixedly secured to the seat (12) and slidably coupled to said inner track (20) to allow selective sliding adjustment of the seat (12) relative to the floor of the vehicle, said outer track (40) including an arcuate bearing surface (57, 59) extending longitudinally along said outer track (40) and opposing and protruding toward said first bearing surface (37, 38);
a plurality of cylindrical bearings (80) positioned between said first bearing surface (37, 38) of said inner track (20) and said arcuate bearing surface (57, 59) of said outer track (40); and
a bearing guide (88, 90) for retaining said plurality of bearings between said arcuate and first bearing surfaces;
**characterized in that**
the first bearing surface (37, 38) is a flattened bearing surface to accommodate torsional loading and movement of said outer track (40) with respect to said inner track (20) while facilitating said selective sliding adjustment of the seat (12) relative to the floor;
said bearing guide (88, 90) extends between the inner track (20) and outer track (40) and includes spaced apart sides (92, 94) and a cross member (96) extending laterally between the sides (92, 94) to define a generally H-shaped cross section, each of the sides (92, 94) includes opposite ends (100, 102) adapted to engage the inner track (20) and the outer track (40) to laterally retain the plurality of bearings (80) between the flattened (37, 38) and arcuate (57, 59) bearing surfaces; and
each of the plurality of bearings (80) is rotatably coupled to the sides (92, 94) of the respective bearing guide (88, 90) .

2. A seat track assembly (10) as set forth in claim 1 wherein said inner track (20) includes two upright sides (22, 24) and a cross member (33) extending laterally therebetween to define a U-shaped channel, said sides (22, 24) each having a distal end (30, 32) opposite said cross member.

3. A seat track assembly (10) as set forth in claim 2 wherein said inner track (20) includes an outer edge (31) extending laterally outwardly from each of said distal ends (30, 32) of each of said sides (22, 24).

4. A seat track assembly (10) as set forth in claim 3 wherein said flattened bearing surface (37, 38) is formed in said outer edge (31) and extends longitudinally with respect to said inner track (20).

5. A seat track assembly (10) as set forth in claim 4 wherein said inner track (20) includes an outer wall (35) extending perpendicularly from each of said outer edges (31) to define a flange (34, 36).

6. A seat track assembly (10) as set forth in claim 5 wherein said inner track (20) includes a plurality of teeth (39) formed along said outer wall (35), each of said plurality of teeth (39) disposed longitudinally with respect to said inner track (20) to define each of the plurality of seating positions.

7. A seat track assembly (10) as set forth in claim 6 wherein said outer track (40) includes two upright sides (42, 44) and a base (54) extending laterally between said sides (42, 44) to define a U-shaped cross section, said sides (42, 44) of said outer track each including a distal end (46, 48, 50, 52).

8. A seat track assembly (10) as set forth in claim 7 wherein said base (54) of said outer track (40) includes a concavity (56, 58) formed therein, said concavity (56, 58) protruding toward said inner track (20) to define said arcuate bearing surface (57, 59) opposing said flattened bearing surface (37, 39).

9. A seat track assembly (10) as set forth in claim 8 wherein said outer track (40) includes a hook (60, 62) formed on each of distal ends (50, 52) of said sides of said outer track (40), said hook (60, 62) engaged with said flange (34, 36) of said inner track (20) to prevent vertical separation of said outer track (40) from said inner track (20).

10. A seat track assembly (10) as set forth in claim 9 including a spacer (64) extending over said hook (60, 62) between said outer track (40) and said inner track (20) for reducing rattle between said outer track (40) and said inner track (20).

11. A seat track assembly (10) as set forth in claim 10 including a latch mechanism (16) operatively coupled to said outer track (40) and lockingly engageable with said plurality of teeth (39) of said inner track (20) to selectively lock the seat (12) in one of the plurality of seating positions.

12. A seat track assembly (10) as set forth in claim 11 wherein said latch mechanism (16) includes a latch plate (74) having a plurality of apertures (79) for lockingly engaging said plurality of teeth (39) to prevent sliding movement of said outer track (40) relative to said inner track (20), said latch plate (74) movably supported on said outer track (40) for movement between a locked position, wherein said plurality of apertures (79) are engaged with said plurality of teeth (39), and an unlocked position, wherein said plurality of apertures (79) are disengaged with said plurality of teeth (39) to allow sliding movement of said outer track (40) relative to said lower track (20).

13. A seat track assembly (10) as set forth in claim 12 including a spring (76) energized between said outer track (40) and said latch plate (74) for biasing said latch plate (74) toward said locked position.

## Patentansprüche

1. Sitzführungsschienenanordnung (10), die dazu ausgebildet ist, einen Sitz (12) an einem Fahrzeugboden zu befestigen und eine wahlweise nach vorne und hinten gerichtete Einstellung des Sitzes relativ zu dem Boden aus einer Anzahl von Sitzpositionen bereitzustellen, wobei die Sitzführungsanordnung aufweist:
eine innere Führungsschiene (20), die fest an dem Fahrzeugboden befestigt ist und eine erste Lagerfläche (37, 38) aufweist, die sich longitudinal entlang der inneren Führungsschiene (20) erstreckt;
eine äußere Führungsschiene (40), die fest an dem Sitz (12) befestigt und gleitend mit der inneren Führungsschiene (20) gekoppelt ist, um eine wahlweise gleitende Einstellung des Sitzes (12) relativ zu dem Fahrzeugboden zu ermöglichen, wobei die äußere Führungsschiene (40) eine gebogene bzw. bogenförmigen Lagerfläche (57, 59) aufweist, die sich longitudinal entlang der äußeren Führungsschiene (40) erstreckt und der ersten Lagerfläche (37, 38) gegenüber liegt und zu dieser hinragt;
eine Anzahl von zylindrischen Lagerkörpern (80), die zwischen der ersten Lagerfläche (37, 38) der inneren Führungsschiene (20) und der bogenförmigen Lagerfläche (57, 59) der äußeren Führungsschiene (40) angeordnet sind; und
eine Lagerführung (88, 90) zum Halten der Anzahl von Lagerkörpern zwischen der gebogenen und der ersten Lagerfläche;
**dadurch gekennzeichnet, dass**
die erste Lagerfläche (37, 38) eine flache Lagerfläche ist, um eine Torsionslast und eine Bewegung der äußeren Führungsschiene (40) bezüglich der inneren Führungsschiene (20) aufzunehmen, während eine wahlweise gleitende Einstellung des Sitzes (12) relativ zum Boden erleichtert wird;
sich die Lagerführung (88, 90) zwischen der inneren Führungsschiene (20) und der äußeren Führungsschiene (40) erstreckt und beabstandete Seiten (92, 94) und ein Querelement (96) aufweist, das sich lateral zwischen den Seiten (92, 94) erstreckt, um einen im wesentlichen H-förmigen Querschnitt zu definieren, wobei jede der Seiten (92, 94) gegenüberliegende Enden (100, 102) aufweist, die dazu ausgebildet sind, in die innere Führungsschiene (20) und die äußere Führungsschiene (40) einzugreifen, um die Anzahl von Lagerkörpern (80) zwischen der flachen (37, 38) und der bogenförmigen (57, 59) Lagerfläche lateral zu halten; und
jeder der Anzahl von Lagerkörpern (80) drehbar mit den Seiten (92, 94) der jeweiligen Lagerführung (88, 90) gekoppelt ist.

2. Sitzführungsschienenanordnung (10) nach Anspruch 1, bei der die innere Führungsschiene (20) zwei aufrechte Seiten (22, 24) und ein Querelement (33), das sich lateral dazwischen erstreckt, um einen U-förmigen Kanal zu definieren, aufweist, wobei die Seiten (22, 24) jeweils ein distales Ende (30, 32) gegenüber dem Querelement haben.

3. Sitzführungsschienenanordnung (10) nach Anspruch 2, bei der die innere Führungsschiene (20) eine äußere Kante (31) aufweist, die sich lateral nach außen von jedem distalen Ende (30, 32) einer jeden Seite (22, 24) erstreckt.

4. Sitzführungsschienenanordnung (10) nach Anspruch 3, bei der die flache Lagerfläche (37, 38) in der äußeren Kante (31) ausgebildet ist und sich longitudinal bezüglich der inneren Führungsschiene (20) erstreckt.

5. Sitzführungsschienenanordnung (10) nach Anspruch 4, bei der die innere Führungsschiene (20) eine äußere Wand (35) aufweist, die sich senkrecht von jeder der äußeren Kanten (31) erstreckt, um einen Flansch (34, 36) zu definieren.

6. Sitzführungsschienenanordnung (10) nach Anspruch 5, bei der die innere Führungsschiene (20) eine Anzahl von Zähnen (39) aufweist, die entlang der äußeren Wand (35) gebildet sind, wobei jeder der Anzahl von Zähnen (39) longitudinal bezüglich der inneren Führungsschiene (20) angeordnet ist, um jede der Anzahl von Sitzpositionen zu definieren.

7. Sitzführungsschienenanordnung (10) nach Anspruch 6, bei der die äußere Führungsschiene (40) zwei aufrechte Seiten (42, 44) und eine Grundfläche (54), die sich lateral zwischen den Seiten (42, 44) erstreckt, um einen U-förmigen Querschnitt zu definieren, aufweist, wobei die Seiten (42, 44) der äußeren Führungsschiene jeweils ein distales Ende (46, 48, 50, 52) aufweisen.

8. Sitzführungsschienenanordnung (10) nach Anspruch 7, bei der die Grundfläche (54) der äußeren Führungsschiene (40) eine darin gebildete Konkavität (56, 58) aufweist, wobei die Konkavität (56, 58) in Richtung der inneren Führungsschiene (20) ragt, um die bogenförmige Lagerfläche (57, 59), die der flachen Lagerfläche (37, 39) gegenüberliegt, zu definieren.

9. Sitzführungsschienenanordnung (10) nach Anspruch 8, bei der die äußere Führungsschiene (40) einen Haken (60, 62) aufweist, der an jedem der distalen Enden (50, 52) der Seiten der äußeren Führungsschiene (40) gebildet ist, wobei der Haken (60, 62) mit dem Flansch (34, 36) der inneren Führungsschiene (20) in Eingriff steht, um eine vertikale Trennung der äußeren Führungsschiene (40) von der inneren Führungsschiene (20) zu verhindern.

10. Sitzführungsschienenanordnung (10) nach Anspruch 9, die einen Abstandshalter (64) aufweist, der sich über den Haken (62, 62) zwischen der äußeren Führungsschiene (40) und der inneren Führungsschiene (20) zum Reduzieren eines Klapperns zwischen der äußeren Führungsschiene (40) und der inneren Führungsschiene (20) erstreckt.

11. Sitzführungsschienenanordnung (10) nach Anspruch 10, die einen Verschlussmechanismus (16) aufweist, der wirkend mit der äußeren Führungsschiene (40) gekoppelt ist und arretierbar mit der Anzahl von Zähnen (39) der inneren Führungsschiene (20) in Eingriff bringbar ist, um den Sitz in einer der Anzahl von Sitzpositionen wahlweise zu arretieren.

12. Sitzführungsschienenanordnung (10) nach Anspruch 11, bei der der Verschlussmechanismus (16) eine Verschlussplatte (74) mit einer Anzahl von Öffnungen (79) zum arretierbaren Eingreifen in die Anzahl von Zähnen (39) aufweist, um eine gleitende Bewegung der äußeren Führungsschiene (40) relativ zu der inneren Führungsschiene (20) zu verhindern, wobei die Verschlussplatte (74) bewegbar an der äußeren Führungsschiene (40) für eine Bewegung zwischen einer arretierten Position, bei der die Anzahl von Öffnungen (79) mit der Anzahl von Zähnen (39) in Eingriff stehen, und einer nicht arretierten Position, bei der die Anzahl von Öffnungen (79) nicht mit der Anzahl von Zähnen (39) in Eingriff stehen, um eine gleitende Bewegung der äußeren Führungsschiene (40) relativ zu der inneren Führungsschiene (20) zu ermöglichen, gehaltert ist.

13. Sitzführungsschienenanordnung (10) nach Anspruch 12, die eine Feder (76) aufweist, die zwischen der äußeren Führungsschiene (40) und der Verschlussplatte (74) zum Vorspannen der Verschlussplatte (74) in Richtung der arretierten Position gespannt ist.

## Revendications

1. Ensemble formant glissière de siège (10) adapté pour monter un siège (12) sur le plancher d'un véhicule automobile, et pour fournir un ajustement sélectif vers l'avant et vers l'arrière du siège par rapport au plancher parmi une pluralité de positions d'assise, ledit ensemble formant glissière de siège comportant :
une glissière intérieure (20) fixée de manière fixe sur le plancher du véhicule, et ayant une première surface d'appui (37, 38) s'étendant longitudinalement le long de ladite glissière intérieure (20) ;
une glissière extérieure (40) fixée de manière fixe sur le siège (12) et couplée de manière coulissante à ladite glissière intérieure (20) pour permettre un ajustement coulissant sélectif du siège (12) par rapport au plancher du véhicule, ladite glissière extérieure (40) comportant une surface d'appui en arc (57, 59) s'étendant longitudinalement le long de ladite glissière extérieure (40) et opposée à ladite première surface d'appui (37, 38), et faisant saillie vers celle-ci ;
une pluralité de paliers cylindriques (80) positionnés entre ladite première surface d'appui (37, 38) de ladite glissière intérieure (20) et ladite surface d'appui en arc (57, 59) de ladite glissière extérieure (40) ; et
un guide de paliers (88, 90) pour retenir ladite pluralité de paliers entre lesdites surface en arc et première surface d'appui ;
**caractérisé en ce que**
la première surface d'appui (37, 38) est une surface d'appui aplatie pour accepter une charge de torsion et un déplacement de ladite glissière extérieure (40) par rapport à ladite glissière intérieure (20), tout en facilitant ledit ajustement sélectif coulissant du siège (12) par rapport au plancher ;
ledit guide de paliers (88, 90) s'étend entre la glissière intérieure (20) et la glissière extérieure (40), et comporte des côtés espacés (92, 94) et un élément formant traverse (96) s'étendant latéralement entre les côtés (92, 94) pour définir une coupe transversale généralement en forme de H, chacun des côtés (92, 94) comporte des extrémités opposées (100, 102) adaptées pour venir en prise avec la glissière intérieure (20) et la glissière extérieure (40) afin de retenir latéralement la pluralité de paliers (80) entre les surfaces d'appui aplatie (37, 38) et en arc (57, 59) ; et
chacun de la pluralité de paliers (80) est couplé de manière rotative aux côtés (92, 94) du guide de paliers respectif (88, 90).

2. Ensemble formant glissière de siège (10) selon la revendication 1, dans lequel ladite glissière intérieure (20) comporte deux côtés verticaux (22, 24) et un élément formant traverse (33) s'étendant latéralement entre ceux-ci pour définir un canal en forme de U, lesdits côtés (22, 24) ayant chacun une extrémité distale (30, 32) opposée audit élément formant traverse.

3. Ensemble formant glissière de siège (10) selon la revendication 2, dans lequel ladite glissière intérieure (20) comporte un bord extérieur (31) s'étendant latéralement vers l'extérieur à partir de chacune desdites extrémités distales (30, 32) de chacun desdits côtés (22, 24).

4. Ensemble formant glissière de siège (10) selon la revendication 3, dans lequel ladite surface d'appui aplatie (37, 38) est formée dans ledit bord extérieur (31), et s'étend longitudinalement par rapport à ladite glissière intérieure (20) .

5. Ensemble formant glissière de siège (10) selon la revendication 4, dans lequel ladite glissière intérieure (20) comporte une paroi extérieure (35) s'étendant perpendiculairement à partir de chacun desdits bords extérieurs (31) pour définir un rebord (34, 36).

6. Ensemble formant glissière de siège (10) selon la revendication 5, dans lequel ladite glissière intérieure (20) comporte une pluralité de dents (39) formées le long de ladite paroi extérieure (35), chacune de ladite pluralité de dents (39) étant disposée longitudinalement par rapport à ladite glissière intérieure (20) pour définir chacun de la pluralité de positions d'assise.

7. Ensemble formant glissière de siège (10) selon la revendication 6, dans lequel ladite glissière extérieure (40) comporte deux côtés verticaux (42, 44) et une base (54) s'étendant latéralement entre lesdits côtés (42, 44) pour définir une coupe transversale en forme de U, lesdits côtés (42, 44) de ladite glissière extérieure comportant chacun une extrémité distale (46, 48, 50, 52).

8. Ensemble formant glissière de siège (10) selon la revendication 7, dans lequel ladite base (54) de ladite glissière extérieure (40) comporte une concavité (56, 58) formée dans celle-ci, ladite concavité (56, 58) faisant saillie vers ladite glissière intérieure (20) afin de définir ladite surface d'appui en arc (57, 59) opposée à ladite surface d'appui aplatie (37, 39).

9. Ensemble formant glissière de siège (10) selon la revendication 8, dans lequel ladite glissière extérieure (40) comporte un crochet (60, 62) formé sur chacune des extrémités distales (50, 52) desdits côtés de ladite glissière extérieure (40), ledit crochet (60, 62) étant mis en prise avec ledit rebord (34, 36) de ladite glissière intérieure (20) pour empêcher une séparation verticale de ladite glissière extérieure (40) d'avec ladite glissière intérieure (20).

10. Ensemble formant glissière de siège (10) selon la revendication 9, comportant une entretoise (64) s'étendant au-dessus dudit crochet (60, 62) entre ladite glissière extérieure (40) et ladite glissière intérieure (20) afin de réduire le claquement entre ladite glissière extérieure (40) et ladite glissière intérieure (20).

11. Ensemble formant glissière de siège (10) selon la revendication 10, comportant un mécanisme de verrouillage (16) couplé de manière opérationnelle à ladite glissière extérieure (40), et pouvant être mis en prise de manière verrouillée avec ladite pluralité de dents (39) de ladite glissière intérieure (20) pour verrouiller sélectivement le siège (12) dans une de la pluralité de positions d'assise.

12. Ensemble formant glissière de siège (10) selon la revendication 11, dans lequel ledit mécanisme de verrouillage (16) comporte une plaque de verrouillage (74) ayant une pluralité d'ouvertures (79) pour mettre en prise de manière verrouillée ladite pluralité de dents (39) afin d'empêcher un déplacement coulissant de ladite glissière extérieure (40) par rapport à ladite glissière intérieure (20), ladite plaque de verrouillage (74) étant supportée de manière mobile sur ladite glissière extérieure (40) pour un déplacement entre une position verrouillée, dans laquelle ladite pluralité d'ouvertures (79) sont mises en prise avec ladite pluralité de dents (39), et une position déverrouillée, dans laquelle ladite pluralité d'ouvertures (79) sont libérées de ladite pluralité de dents (39) pour permettre un déplacement coulissant de ladite glissière extérieure (40) par rapport à ladite glissière inférieure (20).

13. Ensemble formant glissière de siège (10) selon la revendication 12, comportant un ressort (76) tendu entre ladite glissière extérieure (40) et ladite plaque de verrouillage (74) afin de rappeler ladite plaque de verrouillage (74) vers ladite position verrouillée.
